# EUROPEAN PATENT SPECIFICATION

(11) **EP 2 128 571 B1**
(45) Date of publication and mention of the grant of the patent: **23.07.2014**
(21) Application number: 08157124.2
(22) Date of filing: 28.05.2008
(51) Int. Cl.: G01D 5/353

(54) **Fiberoptic strain sensor with distributed strain coupling**
Faseroptischer Dehnungsmesser mit verteilter Belastungskopplung
Jauge de contraint à fibre optique avec couplage de contrainte distribuée

(43) Date of publication of application: 02.12.2009
(73) Proprietor: Smartec SA, 6928 Manno (CH)
(72) Inventor: Inaudi, Daniele, 6900 Lugano (CH); Bossi, Marco, 6928 Manno (CH); Barletta, Antonio, 6928 Manno (CH)
(74) Representative: Schmidtchen, Jürgen Christian

(56) References cited:
- US-A- 6 056 436
- US-A1- 2004 114 850
- US-A1- 2007 107 529
- US-B1- 6 276 215

## Description

The present invention refers to strain sensors, and more particular it concerns a long-gauge optical fibre sensor with distributed strain coupling.

In many applications of Structural Health Monitoring, it is necessary to measure strain at different locations of the structure. Structures that can benefit from Structural Health Monitoring include, but are not limited to, buildings, bridges, dams, harbour structures, tunnels, other civil structures, naval units, off-shore structures, pipelines, wind turbines, nuclear power plants and other energy-related structures. Those structures are monitored by installing an array of sensors to measure different parameters related to their state, health condition and environment, including strains, deformations, stresses, forces, temperatures, tilts and many others.

In the last decade, optical fibre sensors (OFS) have become an interesting alternative to traditional sensors based on electrical and mechanical principles. OFS exploit the property that imposed strains on the optical fibre alter the transmitted radiation in a manner detectable and measurable by optical interrogation instruments.

The greatest advantages of the OFS are intrinsically linked to the optical fibre itself that is either used as a link between the sensor and the signal conditioner, or becomes the sensor itself. In almost all OFS applications, the optical fibre (which is a thin glass fibre) is mechanically protected by a polymer coating or a metal coating and further protected by a multi-layer cable structure designed to protect the fibre from the environment where it will be installed. Since glass is an inert material very resistant to almost all chemicals, even at extreme temperatures, it is an ideal material for use in harsh environments such as encountered in geotechnical or in underwater applications. Chemical resistance is a great advantage for long term reliable health monitoring of civil engineering structures, making OFS particularly durable. Since light confined into the core of the optical fibres used for sensing purposes does not interact with any surrounding electromagnetic (EM) field, OFS are intrinsically immune to EM interferences. With such unique advantage over sensors using electrical cables, OFS are obviously the ideal sensing solution when the presence of EM fields, radio frequency or microwaves cannot be avoided. For instance, OFS will not be affected by any electromagnetic field generated by lightning hitting a monitored bridge or dam, nor by the interference produced by a subway train running near a monitored zone. OFS are intrinsically safe and naturally explosion-proof, whereby they are particularly suitable for monitoring applications of risky structures such as oil tankers, gas pipelines or chemical plants. But the greatest and most exclusive advantage of such sensors is their ability to offer also long range sensing capabilities.

The present invention focuses on OFS that allow measuring the axial strain on a structure. The current OFS for strain measurement are designed to be installed on the surface of an existing structure with a variety of methods, including gluing, welding, bolting, clamping. Such strain sensors are generally divided in two categories: short-gauge and long-gauge sensors.

Short gauge sensors measure strain over a short length, typically 30 mm or less. Typical examples of this type of sensors include fibre Bragg grating sensors and Fabry-Perot sensors. These sensors are not adapted to perform measurements on structures that present an uneven distribution of strain or have local defects that can induce errors in the strain reading.

Long-gauge sensors measure an average strain over a longer measurement basis, generally of more than 30 mm and usually up to some metres. This allows obtaining an averaged or integral strain value that is more representative of the global strain field in a part of the structure.

Frequently used structural materials, such as concrete, steel, masonry and composites, often exhibit local defects, such as cracks, aggregates, thickness or diameter variations, air pockets and inclusions, introducing discontinuities in the mechanical properties of the material at a local level. Yet, the properties of the material at a global level are more indicative for structural behaviour. Therefore, for structural monitoring purposes, it is necessary to use sensors that are insensitive to local material discontinuities. A long-gauge strain or deformation sensor, by definition, is a sensor with a gauge-length several times larger than the maximal distance between discontinuities or the maximal diameter of inclusions in the monitored material.

Several optical fibre strain sensors are disclosed in the literature.

The papers "Low-coherence deformation sensors for the monitoring of civil-engineering structures", D. Inaudi et al., Sensors and Actuators A, Vol. 44, (1994), pp. 125-130, "Coherence multiplexing of in-line displacement and temperature sensors", D. Inaudi, Optical Engineering, July 1995, Vol. 34, No. 7, pp. 1912-1915, "Packaging interferometric sensors for civil structural monitoring", D. Inaudi et al., OFS-13, 13th International Conference on Optical Fiber Sensors, Kyongju, Korea, 12 - 16.4.1999, Vol. 3746, pp. 120-123, describe a long-gauge optical fibre sensors based on low-coherence interferometry. The sensors are designed to measure distributed strain over a long-gauge length, typically from 0.3 m to 20 m or more. The optical fibre is protected by a tube in the measurement area, shielding the sensing optical fibre from external influences. The sensors can be embedded in concrete and other materials or surface mounted on an existing structure by the use of two anchor pieces placed at the ends of the measurement area. The sensing fibre can be pre-tensioned between the anchor pieces.

US 2006/0285813 A describes a very similar approach to measuring strain over a long gauge. The document describes a method for making the two anchors at the ends the measurement zone by using a glass or metal seal, thus preventing any creep of the pre-tensioned fibre. Also in this case the sensing fibre is mechanically coupled to the structure under test at the two ends of the measurement zone. An external tube is used to protect the optical fibre and is designed to slide at the anchor points to reduce the sensor stiffness.

WO 98/58231 A and EP 0264622 A describe a long-gauge optical fibre sensor measuring length variations using a twisted wire. The sensing optical fibre is attached to the structure under test at the ends of the measurement zone by using two anchor blocks, and is pre-tensioned in-between. The sensing optical fibre is protected by a flexible tube.

The paper "Qualification of a Fiber-Optic Strain Monitoring System for Deep-Water Risers", P. Guaita et al., ICEM12 - 12th International Conference on Experimental Mechanics, 29.08 - 2.09.2004, Bari, Italy, describes a long-gauge optical fibre sensor, where the sensing optical fibre is continuously bonded to an encapsulation over its whole length. The sensor is designed to measure average strain of underwater structures such as risers, platform legs and naval units.

The paper "Development of distributed strain and temperature sensing cables", D. Inaudi et al., 17th International Conference on Optical Fibre Sensors, Bruges, Belgium, 23-27 May, 2005, describes the design of optical fibre sensors allowing the measurement of strain with a distributed strain sensing interrogator. The sensing cables are designed to obtain a continuous coupling of the strain experienced by the structure under test to the sensing optical fibre. The optical fibre is continuously encased into an encapsulation made by a polymer material that is then attached to the structure under test. The encapsulation transfers the strain from the structure under test to the sensing optical fibre over its whole length.

EP 1816432 A describes a short-gauge sensor where the sensing optical fibre is attached to a flexible element, also used as gauge carrier. The sensor is designed to be installed by attaching, gluing or welding the two holders at the ends of the measurement area to the structure under test.

US2002/028034 A discloses a sensor array, where the sensing optical fibres are embedded into a flexible patch that is then attached to the structure under test. The design also includes a provision of installing a second sensing optical fibre that is decoupled from strain and is used as temperature compensation sensor.

US 6276216 B1 discloses a sensor including a sensing unit. The sensing unit includes a sensing section and a hollow element surrounding the sensing section. No encapsulation of the sensing unit is provided and the hollow element directly adheres over its whole length to a structure being monitored, so that a direct coupling of the strain to the sensing fibre section takes place. Thus, this sensor has the drawbacks of the distributed-strain coupling sensors discussed above.

US 2007/107259 discloses a short-gauge sensor using a sensing fibre section as deformation amplifier. The sensing fibre section has no encapsulation and is anchored at its ends to a test body, internally of the body.

US 6056436 A discloses a short-gauge optical fibre sensor system with cascaded sensing fibre sections for independent temperature and strain measurements. In the embodiment with a hollow element surrounding the sensing fibre sections, such sections are connected to the hollow element at a single point and no encapsulation for the hollow element is provided. In other embodiment, the sensing sections directly adhere to a structure being monitored.

US 2004/114850 A1 discloses a system suitable for long-gauge sensing, in which the sensing fibre section is tensioned between the two ends of a tube, and the tube is anchored at its ends to the structure being monitored. No encapsulation of the tube is provided.

The prior art systems, whether of the short-gauge or the long-gauge type, show limitations in some applications, including but not limited to monitoring of ship hulls, offshore platforms, subsea structures, metallic or composite or concrete structures in general.

In these applications, one wishes to use a sensor that:
- operates on a long measurement base (long-gauge);
- can be installed without drilling, welding or otherwise damaging the existing structure;
- allows a continuous, distributed coupling of the strain from the structure under test to the sensor itself;
- can be installed on existing paint or other corrosion-protection layers;
- can be installed by divers underwater;
- can survive high water pressure (up to 300 bar or more) and can work reliably in these conditions;
- is not affected by the presence of sea water or other corrosive liquids and gases;
- can be used in explosion-critical classified areas without risk of explosion initiation.

The above-discussed prior art systems do not wholly meet such requirements.

Systems providing for the anchoring to a structure being monitored at the ends of the measurement basis require an accurate surface preparation, what is difficult to obtain e.g. in underwater structures; such kind of anchoring does not allow a good strain coupling from the structure to the sensor; the anchoring technique may affect the integrity of paint or other corrosion-protecting layers possibly applied onto the structure; it is difficult to ensure provision of precise and reliable information over long periods of time.

In turn, existing distributed strain-coupling systems directly couple the strain from the host structure to the sensor. This is disadvantageous in the case where non-uniform strain is present. In case of a crack in the host structure, such systems could cause a strain peak in the sensing fibre and lead to its rupture.

It is an object of the present invention to provide a long-gauge optical fibre sensor that overcomes the limitation of the prior art systems.

This object is achieved by a long-gauge optical fibre sensor as claimed in claim 1.

The sensor of the invention combines the anchoring at the ends of the sensing section with a distributed strain coupling between the structure being monitored and the sensor, in particular the protecting member in which the sensing unit(s) is (are) encapsulated.

Thanks to the attachment of the protecting member to the structure being monitored over the entire length of the member itself, a distributed strain coupling between the structure and the sensor can be achieved and no accurate surface preparation of the structure is required. The true redistribution of the strain over the measurement length allowed by the invention avoids excessive strain in the sensing fibre and provides a true measurement of the average strain over the measurement length. The protecting member with a length greater than the length of the sensing fibre section, or, in case of multiple sensing units encapsulated into a common protecting member, a length such that the protecting member protrudes beyond the extreme sensing units, allows a smooth strain coupling at the ends of the sensor. The sensor can be glued or clamped to the structure, whereby the integrity of any paint or protective layer applied to the structure can be preserved.

In this manner, the invention allows handling and installing a sensor anchored at both ends as if it was a sensor encapsulated over its whole length.

Preferred embodiments of the invention, given by way of non-limiting examples, will be now described in greater detail with reference to the accompanying drawings, in which:
- Fig. 1 is a schematic representation of a long-gauge optical fibre strain sensor according to the invention;
- Fig. 2 shows a hollow element also having fibre holding functions;
- Figs. 3 and 4 show two possible manners of attaching the sensor to a structure under test;
- Figs. 5a to 5c show the assembling of the sensing unit to the encapsulation;
- Fig. 6 shows a sensor with two sensing units; and
- Fig. 7 shows an array of several interconnected sensors forming a quasi-distributed sensor.

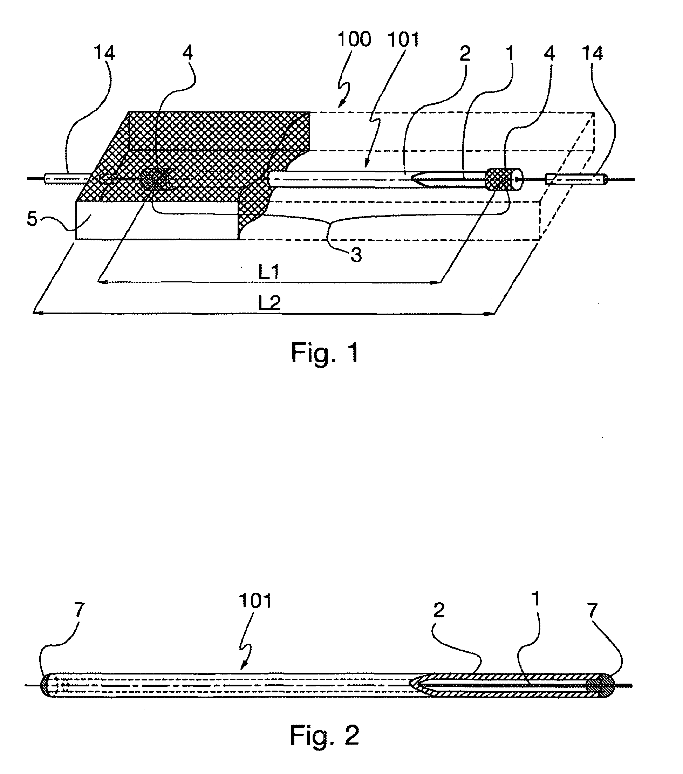

As shown in Figure 1, a long-gauge optical fibre strain sensor 100 according to the invention essentially comprises: a sensing optical fibre 1 in which a sensing section 3 with length L1 is defined; a hollow element 2 surrounding sensing optical fibre 1 over the whole sensing section 3; two holders 4 positioned at the two ends of sensing section 3 and anchored to fibre 1; and a protecting member or encapsulation 5, having a length L2 greater than length L1 of sensing section 3, in which optical fibre 1, hollow element 2 and holders 4 are encapsulated.

The whole of fibre sensing section 3, hollow element 2 and holders 4 will also be referred to as sensing unit 101.

Sensing optical fibre 1 is used to measure the average strain between the two holders 4 defining the sensor gauge-length L1. A typical length L1 for the preferred applications mentioned above is from some centimetres to some metres, e. g. 0.1 m to 5 m and typically 2 m. In a preferred embodiment, sensing section 3 included between holders 4 is pre-tensioned in order to allow the measurement of both tensile and compressive strains.

Sensing section 3 can be based on a variety of optical sensing techniques, including but not limited to: fibre Bragg gratings, long-period gratings, intrinsic or extrinsic Fabry-Perot interferometry, Michelson, Mach-Zehnder or Sagnac interferometry, low-coherence (white light) interferometry, intensity measurements, polarimetry, Brillouin scattering, Rayleigh scattering, time-of-flight measurement, radio-frequency light modulation. All such techniques are well known to the skilled in the art and no detailed description is necessary.

Sensing optical fibre 1 is attached to holders 4 by using cement, glue, resin, mechanical clamping or other means ensuring that the fibre will be perfectly coupled and will not slip or creep with respect to holders 4.

This setup allows the creation of a so-called long-gauge sensor, averaging the strain reading over a long measurement basis (L1), so that the influence of local defects or discontinuities is eliminated. In the case of a sensing section based on sensor technologies that provide point measurements, such as fibre Bragg gratings, long-period gratings, and Fabry-Perot interferometers, averaging the reading over the whole sensing section 3, which is much longer than that of the active element, allows circumventing the limited ability of such technologies to measure over a long base.

Hollow element 2 serves for several purposes, in particular protecting and shielding sensing optical fibre 1 from external influences present in the application environment, such as water, humidity, pressure, corrosive or otherwise detrimental chemicals; and allowing the application of the pretensioning to sensing fibre 1 by counter-acting the required force, possibly in combination with encapsulation 5. It connects to holders 4 at the end of sensing section 3.

Through hollow element 2, optical fibre 1 is also shielded from any strain perpendicular to the fibre axis, present in the structure under examination, which can produce erroneous readings. Hollow element 2 can also be used to shield sensing optical fibre 1 from the external pressure that can also produce erroneous readings.

Moreover, hollow element 2 allows minimum-friction movements of sensing section 3 necessary in order such section 3 can be uniformly tensioned even in case of non-uniform external stresses, so that the sensor properly operates also when sensor technologies providing point measurements are used.

In a preferred embodiment, hollow element 2 is a tube made of stainless steel, titanium, composite material, high-performance plastics or other suitable materials resistant to environmental conditions.

Advantageously, hollow element 2 can also provide the fibre-holding functions, as shown in Figure 2, where the ends of the sensing fibre section 3 are directly secured to the ends of tube 2 by means e.g. of two cement or resin plugs 7.

Encapsulation 5 has two main functions: surrounding and protecting sensing unit 101; and transferring the strain and deformations from the structure under test to holders 4 (or to tube 2) and therefore indirectly to sensing fibre 1.

Connection optical cables 14 secured to encapsulation 5 are used to interconnect sensor 100 to an appropriate measurement system (not shown) or to chain several sensors 100 together.

One of the main innovations of the present invention consists in the fact that transfer of strain from the structure under test to the sensor is not obtained at discrete points, typically at the two ends of the sensing section, as in prior art documents mentioned above, but is made by attaching encapsulation 5 to a structure under test over its whole length. This allows increasing the strain transfer area and reducing the need for an accurate surface preparation at the attachment points. Moreover, having an encapsulation with a length L2 greater than length L1 of sensing section 3 of fibre 1, e.g. about 20% greater, allows a smooth strain transfer at the ends of sensing section 3.

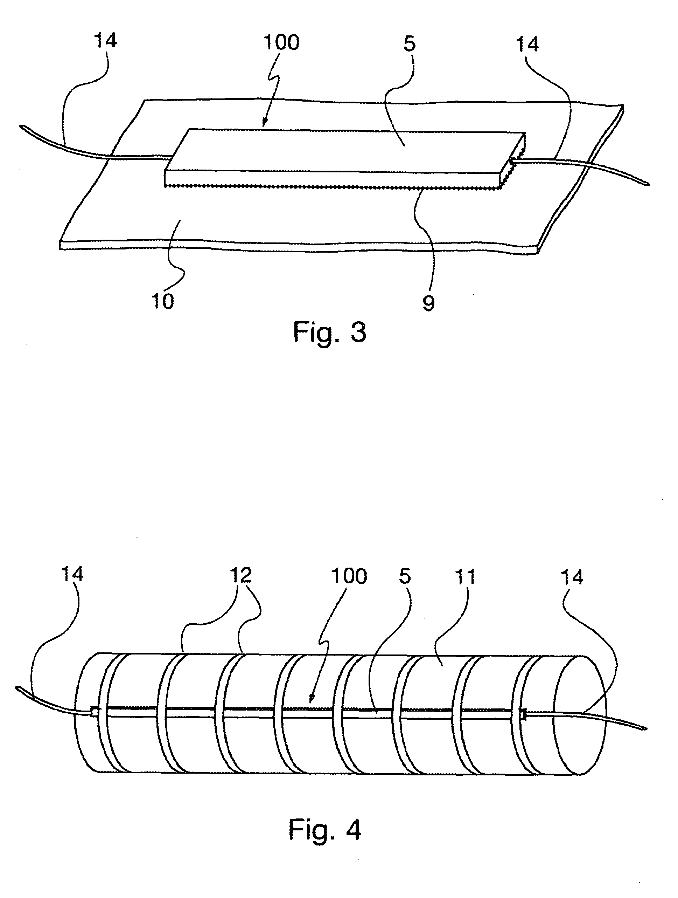

Figures 3 and 4 show the attachment of sensor 100, through encapsulation 5, to two differently shaped structures under test. In Fig. 3, structure 10 under test is a substantially planar, possibly painted, metallic structure, and encapsulation 5 is secured on top of it by means of glue 9. In Fig. 4, structure 11 under test is a tubular structure and sensor 100 is secured thereto by clamping, for example by means of a plurality of straps 12 suitably distributed along encapsulation 5. In this latter example, the friction between encapsulation 5 and tubular structure 11 produced by tightening straps 12 serves as a distributed strain transfer mechanism.

Encapsulation 5 can be made by using different materials and techniques, according to the specific environment and the specific structure for which sensor 100 is intended. In particular, encapsulation 5 can be made of a composite material, epoxy resin, concrete, thermoplastic material, rubber, silicone, metal or any other formable material. The specific material is selected for its mechanical properties and its resistance to the environmental conditions, in particular the presence of chemicals, high pressures or extreme temperatures. A preferred material is a glass-fibre reinforced thermoplastic material.

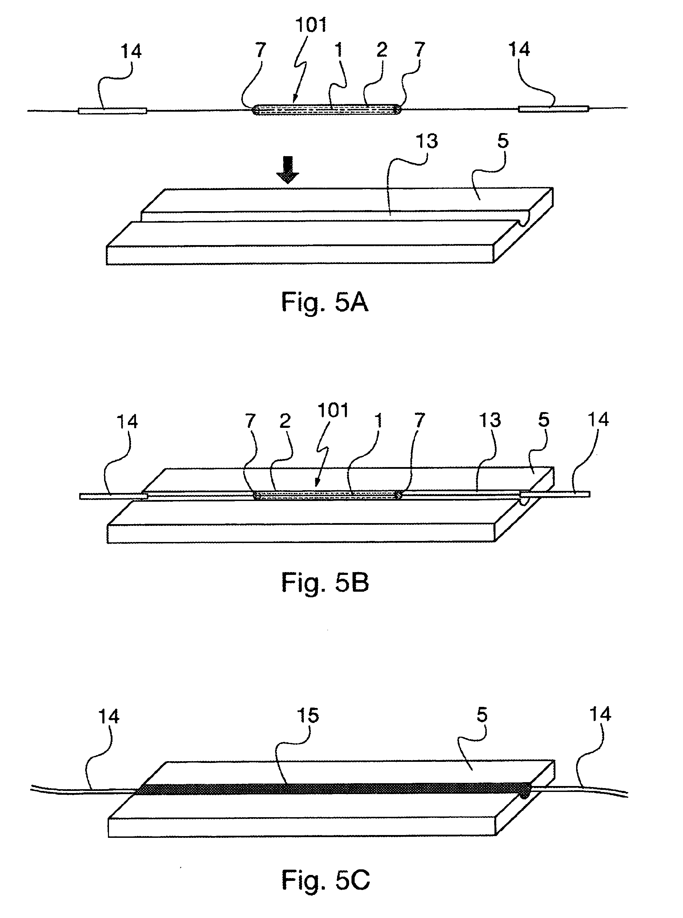

Figs 5A to 5C illustrate the steps of assembling sensing unit 101 to encapsulation 5. Encapsulation 5 is formed with a groove 13 that is arranged to receive and position the hollow element and the holders (here formed as shown in Fig. 2) with the fibre secured thereto, as well as the ends of connection cables 14. Once all elements are in place as shown in Figure 5B, the groove 13 is filled with epoxy glue or resin 15 to create a smooth encapsulation (Fig. 5C).

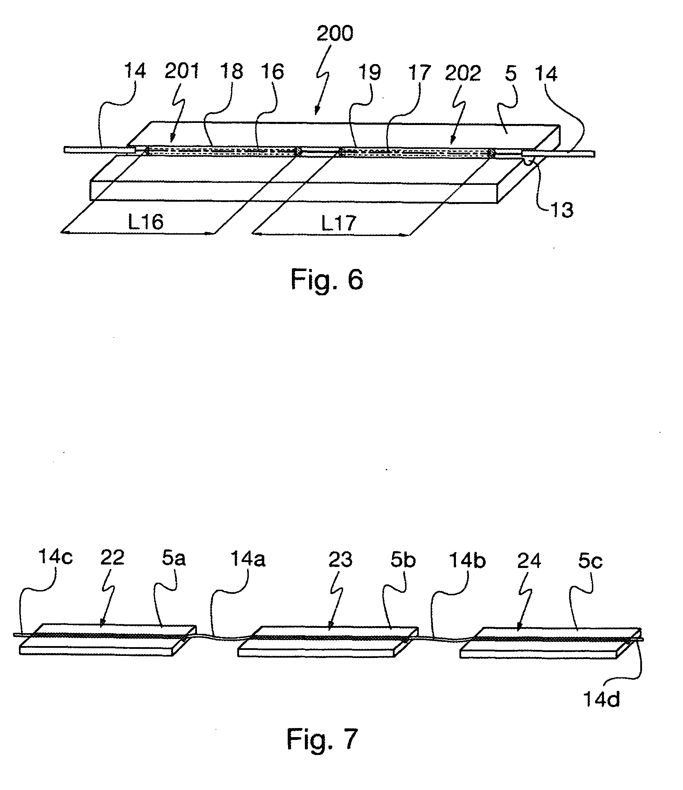

Referring now to Figure 6, a sensor 200 is shown containing, within a single encapsulation 5, several sensing units, e.g. two units 201, 202, measuring strain at different locations along encapsulation 5. Each unit 201 and 202 is made like sensing unit 101 described above and contains therefore a sensing fibre section 16 and 17, respectively, and a hollow element 18 and 19, respectively, which in the illustrated example is of the kind acting also as fibre holder, like the element shown in Fig. 2. Of course, separate holders like holders 4 shown in Fig. 1 could be used as well. The first sensing unit 201 measures the average strain over length L16 of fibre section 16, whilst the second sensing unit 202 measures the average strain over length L17 of fibre section 17. Lengths 16 and 17 need not be identical. Encapsulation 5 has such a length that it protrudes beyond sensing units 201, 202. Sensing units 201, 202 may be based on any of the above mentioned sensing techniques. Of course, more than two sensing units can be provided.

As known to the skilled in the art, encapsulation 5 can also contain other functional elements such as optical fibre temperature sensors or temperature compensating sensors (mounted so that they are not affected by strain), optical fibre pressure sensors, other optical sensors, optical or electrical cables, electrical sensors, mechanical connections to secure the incoming and outgoing connecting cables, mechanical elements to facilitate installation and coupling to the structure under test. The encapsulation can also be used to print any information on its surface.

If allowed by the selected sensing technology, it is also possible to install several sensors along a single optical cable. This is referred as in-line multiplexing or distributed sensing. An example of this possibility is shown in Figure 7, where three sensors 22, 23 and 24 are chained together. References 14a and 14b denote the cable sections interconnecting said sensors, whereas end cable sections 14c, 14d serve for connection to a receiver and/or other functional units. Each sensor 22 - 24 can have either a single sensing unit or multiple sensing units within the respective encapsulation 5a - 5c. A structure like that shown in Fig. 7 serves for strain detection along several sections of a structural element. Of course, a different number of sensors can be provided, depending on the length of the structural element.

The sensor according to the invention can be conveniently used for the monitoring of many types of structures in the civil, defence, oil and gas, energy, automotive, aerospace, industrial and medical fields, but it was especially designed for the inspection of marine structures, including ship hulls, off-shore platforms, risers and other sub-sea structures. In those applications the sensor offers the advantage of being able to measure above and under water, to withstand high pressures such as those found in deep-water applications, to be installed on the surface of existing structures, without the need to accurately condition the surface prior to its installation, and to protect the sensing optical fibre from aggressive chemicals such as seawater, hydrocarbons and marine growth. In these applications, the use of long-gauge sensors is advantageous to average the measured strain over a length larger than the size of such local defects as micro-cracks, local changes in the thickness of steel plates or tubes, local corrosion and other local defects. This is impossible with short-gauge sensors. In the case of off-shore structures built with tubular or prismatic elements it is even possible to install the sensors directly under water, by clamping them to the element to be monitored. This work can be performed by divers or by Remote Operated Vehicles (ROVs). This is impossible when using long-gauge sensors that require direct attachment of the anchors to the structure under test.

Besides the cited application to monitoring naval units and underwater structures, the sensor according to the invention can be advantageously used in other applications that require a long-gauge sensor and that can be installed with a distributed strain coupling. Example of such applications include the monitoring of concrete structures (newly built or already existing), large metal structures such as steel bridges and roller-coasters, large composite structures such as composite ship hulls or composite risers, wood structures, masonry structures, rocks and stones.

## Claims

1. An optical fibre strain sensor (100; 200), including at least one sensing unit (101; 201, 202), in turn including:
- a sensing section (3; 16, 17) defined in a sensing optical fibre (1), said sensing section (3; 16, 17) having a length (L1; L16, L17) such that it is capable of providing information on a global strain field in a corresponding length of a structure (10, 11) being monitored;
- fibre-holders (4; 7) provided at both ends of said sensing section (3) and anchored to the fibre (1) so as to prevent any slipping thereof;
- a hollow element (2) surrounding said sensing section (3; 16, 17) while allowing movements of the sensing optical fibre (1);
the optical fibre sensor (100; 200) further including a protecting member (5), said protecting member being distinct from the hollow element (2), having a length (L2) greater than a length of the at least one sensing unit (101; 201, 202) and encapsulating said at least one sensing unit (101; 201, 202), said protecting member (5) being configured to adhere over its whole length to the structure (10, 11) being monitored.

2. The sensor as claimed in claim 1, wherein a plurality of sensing units (201, 202) are encapsulated into said protecting member (5), each sensing unit (201, 202) including a sensing fibre section (16, 17) for monitoring a respective length (L16, L17) of the structure (10, 11), and the protecting member (5) having such a length that it protrudes beyond extreme units in the plurality.

3. The sensor as claimed in claim 1 or 2, wherein the hollow element (2) in the or each sensing unit (201, 202) performs the functions of the fibre-holders (7), the ends of the sensing section (3; 16, 17) being secured to the ends of the hollow element (2).

4. The sensor as claimed in any preceding claim, wherein the sensing optical fibre (1) in the or each sensing section (3) is pre-tensioned, the pretensioning force being counteracted by said hollow element (2) possibly jointly with said protecting member (5).

5. The sensor as claimed in any preceding claim, wherein said protecting member (5) is provided with a longitudinal groove (13) for housing the or each sensing unit (101; 201, 202), an adhesive or a resin (15) being provided for filling said groove (13) and keeping the or each sensing unit (101; 201, 202) in place while forming a smooth encapsulation.

6. The sensor as claimed in any preceding claim, wherein said protecting member (5) is configured to be glued or clamped to the structure (10, 11) being monitored.

7. The sensor as claimed in any preceding claim, wherein said hollow element (2) and said protecting member (5) are made of a material arranged to resist to water, humidity, high pressure and aggressive agents.

8. The sensor as claimed in claim 7, wherein said hollow element (2) is made of a material chosen in the group including stainless steel, titanium, composite material, high-performance plastics.

9. The sensor as claimed in claim 7 or 8, wherein said protecting member (5) is made of a formable material chosen in the group including composite materials, epoxy resins, concrete, thermoplastic materials, possibly reinforced with fibres, rubber, silicone and metals.

10. The sensor as claimed in any preceding claim, wherein the or each sensing section (3; 16, 17) is based on a technique chosen in the group including: fibre Bragg grating sensors, long-period grating sensors, intrinsic or extrinsic Fabry-Perot interferometers, interferometric sensors, low-coherence interferometric sensors, intensity-based sensors, polarimetric sensors, Brillouin or Rayleigh scattering sensors, time-of-flight sensors, radiofrequency light modulation sensors.

11. The sensor as claimed in any preceding claim, wherein said protecting member (5) supports further functional elements, in particular a temperature sensor and/or a temperature compensation sensor.

12. The sensor as claimed in any preceding claim, wherein an interconnection optical cable (14; 14a, 14b, 14c, 14d) is secured to said protecting member (5) for connection of the sensor (100; 200; 22, 23, 24) to a measurement instrument and/or to another similar equipment.

13. The sensor as claimed in any preceding claim, in-line multiplexed with a plurality of similar sensors (22, 23, 24) along a same optical cable (14a, 14b, 14c, 14d) to form a quasi-distributed sensor.

14. Use of the sensor as claimed in any preceding claim for monitoring strain, and possibly temperature, in a structure (10, 11) chosen in the group including: ship hulls, offshore platforms, subsea structures, metallic or composite or concrete structures in general.

## Patentansprüche

1. Lichtleitfaserdehnungssensor (100; 200) mit mindestens einer Sensoreinheit (101; 201, 202), die aufweist:
- einen Sensorabschnitt (3; 16, 17), der in einer Sensorlichtleitfaser (1) definiert ist, wobei der Sensorabschnitt (3; 16, 17) eine Länge (L1; L16, L17) aufweist, dass er dazu in der Lage ist, Information in Bezug auf ein globales Dehnungsfeld in einer entsprechenden Länge einer überwachten Struktur (10, 11) zu liefern;
- Faserhalter (4; 7), die an beiden Enden des Sensorabschnitts (3) vorgesehen sind und an der Faser (1) befestigt sind, so dass ein Rutschen derselben verhindert wird;
- ein Hohlelement (2), das den Sensorabschnitt (3; 16, 17) umgibt, während es Bewegungen der Sensorlichtleitfaser (1) ermöglicht;
wobei der Lichtleitfasersensor (100; 200) ferner ein Schutzbauteil (5) aufweist, das sich von dem Hohlelement (2) unterscheidet und eine Länge (L2), die größer als eine Länge der mindestens einen Sensoreinheit (101; 201, 202) ist, aufweist und die mindestens eine Sensoreinheit (101; 201, 202) einkapselt, wobei das Schutzbauteil (5) dazu ausgebildet ist, über seiner gesamten Länge an der überwachten Struktur (10, 11) zu haften.

2. Sensor nach Anspruch 1, bei dem eine Mehrzahl von Sensoreinheiten (201, 202) in dem Schutzbauteil (5) eingekapselt sind, wobei jede Sensoreinheit (201, 202) einen Sensorfaserabschnitt (16, 17) zum Überwachen einer jeweiligen Länge (L16, L17) der Struktur (10, 11) aufweist und das Schutzbauteil (5) eine Länge aufweist, dass es über äußerste Einheiten der Mehrzahl hinaussteht.

3. Sensor nach Anspruch 1 oder 2, bei dem das Hohlelement (2) in der oder jeder Sensoreinheit (201, 202) die Funktionen der Faserhalter (7) hat, wobei die Enden des Sensorabschnitts (3; 16, 17) an den Enden des Hohlelements (2) befestigt sind.

4. Sensor nach einem der vorhergehenden Ansprüche, bei dem die Sensorlichtleitfaser (1) in dem oder jedem Sensorabschnitt (3) vorgespannt ist, wobei der Vorspannkraft durch das Hohlelement (2), möglicherweise in Verbindung mit dem Schutzbauteil (5), entgegengewirkt wird.

5. Sensor nach einem der vorhergehenden Ansprüche, bei dem das Schutzbauteil (5) mit einer Längsnut (13) zum Aufnehmen der oder jeder Sensoreinheit (101; 201, 202) versehen ist, wobei ein Klebstoff oder ein Harz (15) zum Füllen der Nut (13) und Halten der oder jeder Sensoreinheit (101; 201, 202) an ihrer Position vorgesehen ist, während eine glatte Einkapselung ausgebildet wird.

6. Sensor nach einem der vorhergehenden Ansprüche, bei dem das Schutzbauteil (5) dazu ausgebildet ist, an die überwachte Struktur (10, 11) geklebt oder geklemmt zu werden.

7. Sensor nach einem der vorhergehenden Ansprüche, bei dem das Hohlelement (2) und das Schutzbauteil (5) aus einem Material ausgebildet sind, das so vorgesehen ist, dass es Wasser, Feuchtigkeit, hohem Druck und aggressiven Mitteln widersteht.

8. Sensor nach Anspruch 7, bei dem das Hohlelement (2) aus einem Material ausgebildet ist, das aus der Gruppe ausgewählt ist, die rostfreien Stahl, Titan, ein Verbundmaterial, Hochleistungskunststoffe enthält.

9. Sensor nach Anspruch 7 oder 8, bei dem das Schutzbauteil (5) aus einem formbaren Material ausgebildet ist, das aus der Gruppe ausgewählt ist, die Verbundmaterialien, Epoxidharze, Beton, thermoplastische Materialien, möglicherweise mit Fasern verstärkt, Gummi, Silikon und Metalle enthält.

10. Sensor nach einem der vorhergehenden Ansprüche, bei dem der oder jeder Sensorabschnitt (3; 16, 17) auf einer Technik basiert, die aus der folgenden Gruppe ausgewählt ist: Faser-Bragg-Gittersensoren, Gittersensoren mit langer Periode, intrinsische oder extrinsische Fabry-Perot-Interferometer, Interferenzsensoren, Interferenzsensoren mit niedriger Kohärenz, intensitätsbasierte Sensoren, polarimetrische Sensoren, Brillouin- oder Rayleigh-Streuungssensoren, Flugzeitsensoren, HF-Lichtmodulationssensoren.

11. Sensor nach einem der vorhergehenden Ansprüche, bei dem das Schutzbauteil (5) weitere funktionale Elemente trägt, insbesondere einen Temperatursensor und/oder einen Temperaturkompensationssensor.

12. Sensor nach einem der vorhergehenden Ansprüche, bei dem ein optisches Verbindungskabel (14; 14a, 14b, 14c, 14d) für eine Verbindung des Sensors (100; 200; 22, 23, 24) mit einem Messinstrument und/oder einem anderen ähnlichen Gerät an dem Schutzbauteil (5) befestigt ist.

13. Sensor nach einem der vorhergehenden Ansprüche, der entlang eines selben optischen Kabels (14a, 14b, 14c, 14d) mit einer Mehrzahl von ähnlichen Sensoren (22, 23, 24) in Reihe gemultiplext ist, so dass ein quasi-verteilter Sensor ausgebildet wird.

14. Verwendung des Sensors nach einem der vorhergehenden Ansprüche zum Überwachen einer Dehnung und möglicherweise einer Temperatur in einer Struktur (10, 11), die aus der Gruppe ausgewählt ist, die enthält: Schiffsrümpfe, Offshore-Plattformen, Unterseestrukturen, metallische Strukturen oder Verbundstrukturen oder Betonstrukturen im Allgemeinen.

## Revendications

1. Capteur de déformation d'une fibre optique (100 ; 200), comprenant au moins une unité de détection (101 ; 201, 202), comprenant à son tour :
- une section de détection (3 ; 16, 17) définie dans une fibre optique de détection (1), ladite section de détection (3 ,16, 17) ayant une longueur (L1 ; L16, L17) telle qu'elle est capable de fournir des informations sur un champ de déformation global correspondant à une longueur de la structure (10, 11) étant surveillée ;
- des supports de fibres (4 ; 7) prévus aux deux extrémités de ladite section de détection (3) et ancrés à la fibre (1) de manière à empêcher tout glissement de celle-ci ;
- un élément creux (2) entourant ladite section de détection (3 ; 16, 17) tout en permettant des mouvements de la fibre optique de détection (1) ;
le capteur pour fibre optique (100 ; 200) comprenant en outre un élément de protection (5), ledit élément de protection étant distinct de l'élément creux (2), ayant une longueur (L2) supérieure à une longueur de la au moins une unité de détection (101 ; 201, 202) et encapsulant ladite au moins une unité de détection (101 ; 201, 202), ledit élément de protection (5) étant configuré de manière à adhérer sur toute sa longueur à la structure (10, 11) étant surveillée.

2. Capteur selon la revendication 1, dans lequel une pluralité d'unités de détection (201, 202) sont encapsulées dans ledit élément de protection (5), chaque unité de détection (201, 202) comprenant une section de détection de fibre (16, 17) pour la surveillance d'une longueur (L16, L17) relative de la structure (10, 11), et l'élément de protection (5) ayant une longueur telle qu'il fait saillie au-delà des unités extrêmes de la pluralité.

3. Capteur selon la revendication 1 ou 2, dans lequel l'élément creux (2) dans la ou chaque unité de détection (201, 202) remplit les fonctions de supports de fibres (7), les extrémités de la section de détection (3 ; 16, 17) étant fixées aux extrémités de l'élément creux (2).

4. Capteur selon l'une quelconque des revendications précédentes, dans lequel la fibre optique de détection (1) dans la ou chaque section de détection (3) est précontrainte, la force de précontrainte étant compensée par ledit élément creux (2) éventuellement conjointement avec ledit élément de protection (5).

5. Capteur selon l'une quelconque des revendications précédentes, dans lequel ledit élément de protection (5) est pourvu d'une rainure longitudinale (13) pour loger la ou chaque unité de détection (101 ; 201, 202), un adhésif ou une résine (15) étant prévu pour le remplissage de ladite rainure (13) et le maintien du ou de chaque unité de détection (101 ; 201, 202) en place tout en formant une encapsulation lisse.

6. Capteur selon l'une quelconque des revendications précédentes, dans lequel ledit élément de protection (5) est configuré pour être collé ou serré sur la structure (10, 11) étant surveillée.

7. Capteur selon l'une quelconque des revendications précédentes, dans lequel ledit élément creux (2) et ledit élément de protection (5) sont faits d'un matériau agencé pour résister à l'eau, à l'humidité, à la haute pression et aux agents agressifs.

8. Capteur selon la revendication 7, dans lequel ledit élément creux (2) est fait d'un matériau choisi dans le groupe comprenant l'acier inoxydable, le titane, le matériau composite, les matières plastiques de haute performance.

9. Capteur selon la revendication 7 ou 8, dans lequel ledit élément de protection (5) est réalisé en un matériau déformable choisi dans le groupe comprenant les matériaux composites, les résines époxy, le béton, les matériaux thermoplastiques, éventuellement renforcés par des fibres, le caoutchouc, la silicone et les métaux.

10. Capteur selon l'une quelconque des revendications précédentes, dans lequel la ou chaque section de détection (3 ; 16, 17) est basée sur une technique choisie dans le groupe comprenant : les capteurs de réseau fibre de Bragg, les capteurs de réseau à longue période, les interféromètres intrinsèques ou extrinsèques de Fabry-Perot, les capteurs interférométriques, les capteurs interférométriques à faible cohérence, les capteurs basés sur l'intensité, les capteurs polarimétriques, les capteurs de diffusion Brillouin ou Rayleigh, les capteurs de temps de vol, les capteurs de modulation de radiofréquence de lumière.

11. Capteur selon l'une quelconque des revendications précédentes, dans lequel ledit élément de protection (5) prend en charge d'autres éléments fonctionnels, en particulier un capteur de température et/ou un capteur de compensation de température.

12. Capteur selon l'une quelconque des revendications précédentes, dans lequel un câble à fibres optiques d'interconnexion (14 ; 14a, 14b, 14c, 14d) est fixé sur ledit élément de protection (5) pour le raccordement du capteur (100 ; 200 ; 22 , 23 , 24) à un instrument de mesure et/ou à un autre équipement similaire.

13. Capteur selon l'une quelconque des revendications précédentes, multiplexé en ligne avec une pluralité de capteurs similaires (22, 23, 24) le long d'un même câble optique (14a , 14b, 14c, 14d) pour former un capteur quasi-distribué.

14. Utilisation du capteur selon l'une quelconque des revendications précédentes, pour la surveillance de la déformation, et, éventuellement, de la température, dans une structure (10, 11) choisi dans le groupe comprenant : les coques de navires, les plates-formes en mer, les structures sous-marines, les structures métalliques ou composites ou en béton en général.
